# EUROPÄISCHE PATENTSCHRIFT

(11) **EP 3 253 128 B1**
(45) Veröffentlichungstag und Bekanntmachung des Hinweises auf die Patenterteilung: **03.04.2019**
(21) Anmeldenummer: 16172735.9
(22) Anmeldetag: 02.06.2016
(51) Int. Cl.: H04W 76/10, H04W 52/02, H04W 68/00

(54) **KOMMUNIKATIONSNETZWERK MIT EINER MANAGEMENT-ENTITÄT MIT CALL BACK-FUNKTIONALITÄT**
COMMUNICATIONS NETWORK WITH A MANAGEMENT ENTITY WITH CALL BACK FUNCTIONALITY
RESEAU DE COMMUNICATION DOTE D'UNE ENTITE DE GESTION AYANT UNE FONCTIONNALITE DE RAPPEL

(43) Veröffentlichungstag der Anmeldung: 06.12.2017
(73) Patentinhaber: Deutsche Telekom AG, 53113 Bonn (DE)
(72) Erfinder: Neubacher, Andreas, 2100 Korneuburg (AT)
(74) Vertreter: Patentship Patentanwaltsgesellschaft mbH

(56) Entgegenhaltungen:
- EP-A1- 2 158 782
- EP-A2- 1 028 403
- WO-A1-2015/200658

## Beschreibung

Die vorliegende Erfindung betrifft ein schnurloses Kommunikationsnetzwerk mit einer Management-Entität mit Call Back bzw. Rückruf-Funktionalität, die ansprechend auf eine Verbindungsanfrage einer Kommunikationsentität eine Angabe über eine Kommunikationszeit liefert, zu der ein Kommunikationsendgerät zur Kommunikation bereit ist. Die Erfindung betrifft ferner ein entsprechendes Verfahren zum Verbindungsaufbau mittels Call Back-Funktionalität.

Zur Kommunikation mit einem mobilen Kommunikationsendgerät bzw. UE (User Equipment) wird üblicherweise das sogenannte "Paging" durchgeführt, z.B. zwischen UE und eNodeB, d.h. der Basisstation, um sicherzustellen, dass das UE Daten empfangen kann.

Um auf ein Paging reagieren zu können, hört ein UE die sogenannten Paging-Kanäle ab. Um Energie zu sparen werden die Paging-Kanäle nicht kontinuierlich abgehört, sondern nur zu bestimmten Zeitpunkten, den sogenannten Paging Occasions (PO). Zum Beispiel wenn ein Gerät alle 10 Sekunden fünfmal für nur eine Sekunde den Paging-Kanal abhört, sinkt der Stromverbrauch für den Empfangsteil pro Tag um etwa 5/10 = ½, d.h. um 50% ab.

Für die Kommunikation zwischen Maschinen bzw. sogenannten "connected Things" im Internet der Dinge (Internet of Things, IoT) kann beispielsweise für manche Anwendungen die Notwendigkeit bestehen für Batterie betriebene Transceiver den Energieverbrauch weiter zu senken.

Ein Hauptanwendungsfall, der im Kontext von loT oft genannt wird, ist der Fall des massiven IoT. Hierbei soll das 5G Kommunikationsnetzwerk den Anwendungsfall einer großen Anzahl dieser Komponenten bzw. IoTs bedienen und verwalten können. In diesem Kontext besteht ein Bedarf daran, den Energieverbrauch von IoT Devices zu senken und die Auswirkungen auf das 5G Netzwerk möglichst gering zu halten.

Eine Methode, die angewandt wird, um den Energieverbrauch dieser Geräte zu senken, ist die Erweiterung der sogenannten DRX (Discontinous Reception, d.h. diskontinuierlicher Empfang) Zyklen. Dabei wird die Zeitspanne zwischen zwei Zeitpunkten, in denen das UE die Paging-Kanäle abhört, erhöht. D.h., wird zum Beispiel einmal pro Tag der Paging-Kanal nur einmal für eine Sekunde abgehört, dann sinkt der Energieverbrauch um (86400-1)/86400=0,9999, d.h. um etwa 99% ab.

Diese Ersparnis an Energie wird allerding durch den Umstand erkauft, dass das Endgerät nur noch einmal am Tag für etwa eine Sekunde erreicht werden kann, um es über anstehende Daten für das Gerät zu informieren.

Das Dokument EP2158782 beschreibt ein Paging Verfahren zum Paging eines mobilen Geräts, bei dem ein erweiterter DRX Zyklus genutzt wird, um Energie zu sparen. Der erweiterte DRX Zyklus ist wesentlich länger als der normale DRX Zyklus. Die Management-Einheit ist so ausgebildet, dass auf eine Anfrage eine passende Antwort (ruf später) zu den Anwendungen gesendet wird, wenn die Anfrage innerhalb eines DRX Zyklus kommt.

Das Dokument WO2015200658 offenbart ein Verfahren zum Erweitern des Schlafmodus in einem mobilen Gerät welches einen Tag aufweist. Der nächste Übertragungszeitpunkt bestimmt sich basierend auf einer Empfangsplanung des Tags und einer Paging-Planung des Kommunikationsnetzwerkes.

Der Datenverkehr zum UE wird daher zwischengespeichert und an das UE erst dann übertragen, wenn das UE erreichbar ist und auf ein Paging reagiert. Dies bedeutet jedoch, dass die Daten zwischengespeichert werden müssen, was sehr ressourcenintensiv sein kann.

Es ist die Aufgabe der vorliegenden Erfindung, eine effiziente Lösung für das oben beschriebene Problem zu finden, d.h. ein Netzwerkkonzept zu schaffen, bei dem die Kommunikationsendgeräte energieeffizient betrieben werden können und ressourcenschonend mit ihnen kommuniziert werden kann.

Diese Aufgabe wird durch die Merkmale der unabhängigen Ansprüche gelöst. Vorteilhafte Weiterbildungsformen sind Gegenstand der abhängigen Ansprüche.

Die Erfindung basiert auf der Erkenntnis, dass eine Management-Entität im Kommunikationsnetzwerk, beispielsweise im Falle von LTE (Long Term Evolution, Standard) eine MME (Mobility Management Entity) die "Wachzeiten" eines UEs kennt und diese Information auch zwischen eNodeB, d.h. Basisstation und der Management-Entität synchron gehalten wird.

Die im Folgenden beschriebenen Netzwerkkonzepte beziehen sich auf Kommunikationsnetzwerke, insbesondere auf solche der fünften Generation (5G). Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (IoT), spezielle Fähigkeiten wie z.B. geringerer Laufzeit, welche über das hinausgehen was 4G Kommunikationsnetze fähig sind zu leisten. Dabei wird 5G als ein Ende-zu-Ende System betrachtet, das sämtliche Netzwerkaspekte beinhaltet mit einem Design, das einen hohen Grad an Konvergenz ermöglicht. 5G wird die heutigen Zugangsmechanismen und deren mögliche Weiterentwicklungen vollständig nutzten, einschließlich der heutigen Festnetzzugangstechnologien vieler anderer noch zu entwickelnder Zugangstechnologien.

5G wird in einem stark heterogenen Umgebung operieren, d.h. mit mehreren Typen von Zugangstechnologien, mehrschichtigen Netzwerken, vielfältigen Typen von Kommunikationsgeräten und Nutzerinteraktionen etc. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Raumen. In solch einer Umgebung gibt es ein fundamentales Verlangen nach 5G, um ein nahtloses und konsistentes Nutzererlebnis über Zeit und Raum zu erfüllen. Für den Betreiber eines 5G Kommunikationsnetzes besteht die Notwendigkeit die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis daran, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich bereitzustellen, zum anderen aber auch die Flexibilität im Betrieb zu erhöhen und maßgeschneiderte Funktionen mit dem geringstmöglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauen, Identität und Privatsphäre der Nutzer erwartet.

Die im Folgenden vorgestellten Geräte, Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

Der im Folgenden verwendete Begriff des "Call Back" bzw. "Rückrufs" bezieht sich nicht auf einen Rückruf im Sinne eines Telefonrückrufs als solchen, sondern auf das Senden von Daten bzw. Anfragen, welches zu einem günstigen Zeitpunkt neu geplant wird. Gemäß einem ersten Aspekt betrifft die Erfindung ein schnurloses Kommunikationsnetzwerk nach Anspruch 1.

Ein solches Kommunikationsnetzwerk bietet den Vorteil einer Call Back- bzw. Rückruffunktionalität, welche in der Management-Entität realisiert ist. Damit kann die Kommunikationsentität über den Zeitpunkt informiert werden, zu dem ein bestimmtes Kommunikationsendgerät kommunikationsbereit ist, um so zielgerichtet die Kommunikation aufzubauen. Somit kann vermieden werden, dass diverse Anfragen zum Verbindungsaufbau zwischengespeichert werden müssen bzw. dass mehrmals ohne Erfolg versucht wird, die Verbindung aufzubauen und so unnötiger Datenverkehr im Netzwerk erzeugt wird. Mit solch einem Kommunikationsnetzwerk können die Kommunikationsendgeräte energieeffizient betrieben werden und die Kommunikationsentität kann ressourcenschonend mit ihnen kommunizieren.

Gemäß einer Ausführungsform des Kommunikationsnetzwerks ist die Management-Entität ausgebildet, die Verbindungsanfrage der Kommunikationsentität an das Kommunikationsendgerät weiterzuleiten, falls der erste Zeitpunkt in das vorgegebene Zeitintervall fällt.

Dies bietet den Vorteil, dass die Verbindung sofort aufgebaut werden kann, wenn die Verbindungsanfrage zu einem Zeitpunkt eintrifft, zu dem das Kommunikationsendgerät kommunikationsbereit ist. Die Information darüber, d.h. das vorgegebene Zeitintervall ist in der Management-Entität gespeichert, so dass die Management-Entität durch einfaches Abfragen des Speichers unverzüglich prüfen kann, ob der Zeitpunkt in das vorgegebene Zeitintervall fällt

Gemäß einer Ausführungsform des Kommunikationsnetzwerks umfasst die Angabe über die Kommunikationszeit einen Zeitraum innerhalb des vorgegebenen Zeitintervalls.

Dies bietet den Vorteil, dass der Kommunikationsentität eine bestimmte, d.h. individuelle Kommunikationszeit zugewiesen werden kann, in der nur diese Kommunikationsentität (und keine andere Kommunikationsentität) eine Verbindungsanfrage stellt, so dass das Kommunikationsnetzwerk entlastet wird und die Verbindungen schneller aufgebaut werden können.

Gemäß einer Ausführungsform des Kommunikationsnetzwerks zeigt die Angabe über die Kommunikationszeit das vorgegebene Zeitintervall an.

Dies bringt den Vorteil, dass die Kommunikationsentität selbst entscheiden kann, zu welchem Zeitpunkt innerhalb des vorgegebenen Zeitintervalls sie eine Verbindungsanfrage zu dem Kommunikationsendgerät initiieren möchte.

Gemäß einer Ausführungsform des Kommunikationsnetzwerks ist die Kommunikationsentität ausgebildet, basierend auf der Angabe über die Kommunikationszeit die Verbindungsanfrage an die Management-Entität zu verzögern, bis der erste Zeitpunkt in das vorgegebene Zeitintervall fällt.

Dies bietet den Vorteil, dass die Verbindungsanfrage in der Kommunikationsentität selbst zwischengespeichert wird und keine Ressourcen zur Zwischenspeicherung im Gateway, in der Management-Entität oder einem sonstigen Netzwerkknoten vorgehalten werden müssen.

Gemäß einer Ausführungsform umfasst das Kommunikationsnetzwerk ferner eine Basisstation, die ausgebildet ist, eine Paging-Anfrage an das Kommunikationsendgerät zu senden, und das Kommunikationsendgerät ist ausgebildet, in dem vorgegebenen Zeitintervall, in dem es zur Kommunikation bereit ist, ansprechend auf die Paging-Anfrage einen Verbindungsaufbau mit der Basisstation zu initiieren.

Dies bringt den Vorteil, dass die Management-Entität ein Paging ausführen kann und basierend auf einer Reaktion des Kommunikationsendgeräts Informationen über das vorgegebene Zeitintervall erhält, in dem das Kommunikationsendgerät zur Kommunikation bereit ist. Mit diesen Informationen kann die Management-Entität das vorgegebene Zeitintervall der Kommunikationsbereitschaft des UE ermitteln und in einem Speicher abspeichern, um auf Verbindungsanfragen der Kommunikationsentität mit einem Rückruf zu antworten, in dem eine Kommunikationszeit angegeben wird, zu der das UE kommunikationsbereit ist.

Gemäß einer Ausführungsform des Kommunikationsnetzwerks ist das Kommunikationsendgerät ausgebildet, außerhalb des vorgegebenen Zeitintervalls einen Energiesparmodus einzunehmen, in dem die Paging-Anfrage nicht empfangen und/oder nicht beantwortet wird.

Dies bringt den Vorteil, dass das Kommunikationsendgerät energieeffizient betrieben wird und doch erreichbar ist. Beim Ausbleiben von Reaktionen des UE auf die Paging-Anfrage kann die Management-Entität erkennen, dass sich das UE gerade im Schlafzyklus befindet und die gespeicherten Informationen zum vorgegebenen Zeitintervall, zu dem das UE kommunikationsbereit ist, entsprechend aktualisieren.

Gemäß einer Ausführungsform des Kommunikationsnetzwerks ist die Management-Entität ausgebildet, das vorgegebene Zeitintervall, zu dem das Kommunikationsendgerät zur Kommunikation bereit ist, basierend auf einer Nachricht von dem Kommunikationsendgerät, die anzeigt, dass die Verbindung zu der Basisstation aufgebaut ist, zu aktualisieren.

Dies bringt den Vorteil, dass das in der Management-Entität gespeicherte vorgegebene Zeitintervall stets aktuell gehalten wird und sich Änderungen im Bereitschaftszyklus des UE anpassen kann.

Gemäß einer Ausführungsform des Kommunikationsnetzwerks zeigt die Nachricht von dem Kommunikationsendgerät das vorgegebene Zeitintervall, zu dem das Kommunikationsendgerät zur Kommunikation bereit ist, an.

Dies bringt den Vorteil, dass das vorgegebene Zeitintervall, zu dem das Kommunikationsendgerät zur Kommunikation bereit ist, direkt aus der Nachricht von dem UE ausgelesen werden kann und in der Management-Entität gespeichert werden kann.

Gemäß einer Ausführungsform des Kommunikationsnetzwerks ist die Management-Entität ausgebildet ist, eine Paging-Nachricht an die Basisstation zu senden, wobei die Paging-Nachricht das vorgegebene Zeitintervall anzeigt, in dem das Kommunikationsendgerät zur Kommunikation bereit ist, und die Basisstation ist ausgebildet ist, die Paging-Anfrage an das Kommunikationsendgerät innerhalb des in der Paging-Nachricht angezeigten vorgegebenen Zeitintervalls zu senden.

Dies bringt den Vorteil, dass das Paging ressourcenschonend ausgeführt werden kann, da es nur dann initiiert werden braucht, wenn das UE auch kommunikationsbereit ist. Es wird unnötiger Datenverkehr auf der Luftschnittstelle eingespart.

Gemäß der Erfindung ist die Management-Entität ausgebildet, ansprechend auf eine Mehrzahl von Verbindungsanfragen einer Mehrzahl von Kommunikationsentitäten den jeweiligen Kommunikationsentitäten Angaben mit verschiedenen Kommunikationszeiten innerhalb des vorgegebenen Zeitintervalls, zu dem das Kommunikationsendgerät zur Kommunikation bereit ist, zuzusenden. Dies bringt den Vorteil, dass jeder Kommunikationsentität ein Zeitraum zugewiesen werden kann, zu dem nur sie eine Kommunikationsverbindung zu dem UE aufbaut. Damit werden fehlschlagende Verbindungsaufbauversuche vermieden.

Gemäß einer Ausführungsform des Kommunikationsnetzwerks umfasst das Kommunikationsendgerät einen Sensor, der ausgebildet ist, Messdaten zu erfassen und ansprechend auf einen Steuerbefehl der Kommunikationsentität die Messdaten an die Kommunikationsentität zu übertragen.

Dies bringt den Vorteil, dass effizient Messdaten einer Vielzahl von Sensoren abgefragt werden können. Die Sensoren können ihre Sensordaten empfangen ohne dabei stets kommunikationsbereit sein zu müssen. Zum Beispiel kann ein Sensor einmal pro Tag kommunikationsbereit sein, um seine Sensordaten an die Kommunikationsentität zu übertragen.

Gemäß einer Ausführungsform ist das Kommunikationsnetzwerk ein Netzwerk einer fünften Generation (5G) oder einer weiteren Generation, und die Management-Entität ist in einer Management und Instrumentierungsschicht des Kommunikationsnetzwerkes angeordnet.

Damit können alle Vorteile der 5G Netzstruktur realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

Gemäß einem zweiten Aspekt betrifft die Erfindung eine Management Entität für ein schnurloses Kommunikationsnetzwerk nach Anspruch 13.

Eine solche Management-Entität bietet den Vorteil einer Call Back- bzw. Rückruffunktionalität. Damit kann die Kommunikationsentität über den Zeitpunkt informiert werden, zu dem ein bestimmtes Kommunikationsendgerät kommunikationsbereit ist, um so zielgerichtet die Kommunikation aufzubauen. Somit kann vermieden werden, dass diverse Anfragen zum Verbindungsaufbau zwischengespeichert werden müssen bzw. dass mehrmals ohne Erfolg versucht wird, die Verbindung aufzubauen und so unnötiger Datenverkehr im Netzwerk erzeugt wird. Mit solch einer Management-Entität können die Kommunikationsendgeräte energieeffizient betrieben werden und die Kommunikationsentität kann ressourcenschonend mit ihnen kommunizieren.

Gemäß einem dritten Aspekt betrifft die Erfindung ein Verfahren nach Anspruch 14.

Ein solches Verfahren bietet den Vorteil einer Call Back- bzw. Rückruffunktionalität. Damit kann die Kommunikationsentität über den Zeitpunkt informiert werden, zu dem ein bestimmtes Kommunikationsendgerät kommunikationsbereit ist, um so zielgerichtet die Kommunikation aufzubauen. Somit kann vermieden werden, dass diverse Anfragen zum Verbindungsaufbau zwischengespeichert werden müssen bzw. dass mehrmals ohne Erfolg versucht wird, die Verbindung aufzubauen und so unnötiger Datenverkehr im Netzwerk erzeugt wird. Mit solch einem Verfahren können die Kommunikationsendgeräte energieeffizient betrieben werden und die Kommunikationsentität kann ressourcenschonend mit ihnen kommunizieren.

Weitere Ausführungsbeispiele werden Bezug nehmend auf die beiliegenden Zeichnungen erläutert. Es zeigen:
Fig. 1 eine schematische Darstellung eines Kommunikationsnetzwerks 100 mit Rückruf-Funktionalität gemäß einer beispielhaften Ausführungsform;
Fig. 2 eine schematische Darstellung eines Kommunikationsnetzwerks 200 mit Rückruf-Funktionalität in der Management-Entität gemäß einer beispielhaften Ausführungsform;
Fig. 3 eine schematische Darstellung eines Kommunikationsnetzwerks 300 mit einer Kommunikationsentität, mehreren Kommunikationsendgeräten und einer Management-Entität mit Rückruf-Funktionalität gemäß einer beispielhaften Ausführungsform;
Fig. 4 eine schematische Darstellung eines Kommunikationsnetzwerks 400 mit zwei Kommunikationsentitäten einem Kommunikationsendgerät und einer Management-Entität mit Rückruf-Funktionalität gemäß einer beispielhaften Ausführungsform;
Fig. 5 eine schematische Darstellung eines Verfahrens zum Aufbau einer Kommunikationsverbindung von Management-Entität über eNodeB zu UE gemäß einer beispielhaften Ausführungsform;
Fig. 6 eine schematische Darstellung des Schichtenaufbaus eines 5G-Kommunikationsnetzwerks 600 gemäß einer beispielhaften Ausführungsform mit Management und Instrumentierungsschicht 603, in der beispielhaft eine Rückruffunktionalität implementiert sein kann;
Fig. 7 eine schematische Darstellung eines Verfahrens 700 zum Kommunikationsaufbau zwischen einer Kommunikationsentität und einem Kommunikationsendgerät über eine Management-Entität mit Rückruf-Funktionalität gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

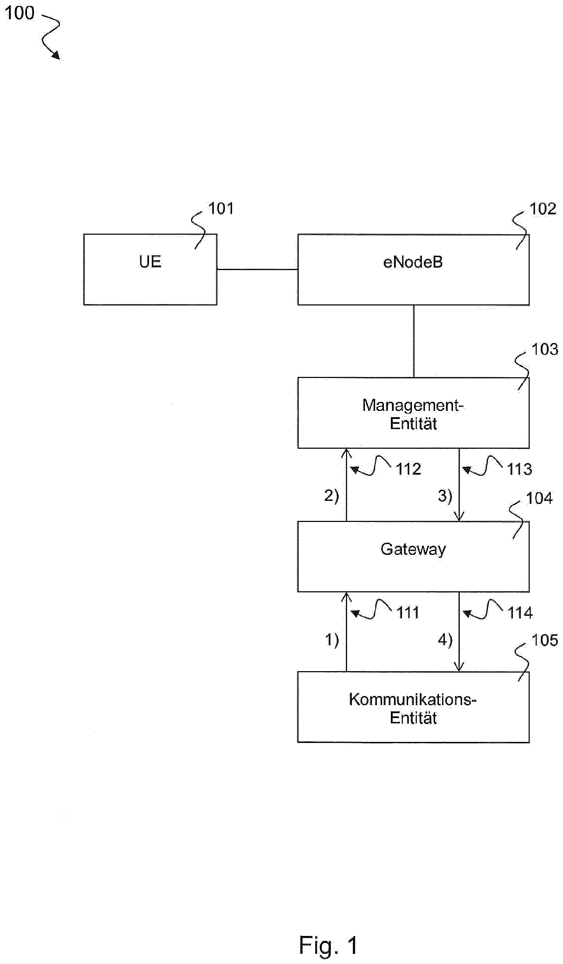

Fig. 1 zeigt eine schematische Darstellung eines Kommunikationsnetzwerks 100 mit Rückruf-Funktionalität gemäß einer beispielhaften Ausführungsform.

Das Kommunikationsnetzwerk 100 umfasst ein Kommunikationsendgerät, beispielsweise ein mobiles Endgerät bzw. UE (User Equipment) 101, das über eine Luftschnittstelle mit einer Basisstation (eNodeB) 102 eine Kommunikationsverbindung aufbauen kann. Die Basisstation 102 ist mit einer Management-Entität 103 gekoppelt, welche Überwachungs- und Steuerungsaufgaben übernimmt. Eine Kommunikationsentität 105, beispielsweise ein Netzwerkknoten oder ein weiteres UE, ist über ein Gateway 104, beispielsweise ein PDN GW (Packet Data Network Gateway) oder ein SGSN/GGSN, an die Management-Entität 103 angebunden. Die Kommunikationsentität 105 kann über die Management-Entität 103 eine Kommunikationsverbindung zu dem Kommunikationsendgerät 101 aufbauen. Das Kommunikationsnetzwerk 100 kann beispielsweise ein 4G oder 5G Netzwerk oder auch eine beliebiges andere Netzwerk sein, bei dem eine Kommunikationsentität 105 eine Kommunikationsverbindung zu einem Kommunikationsendgerät 101 aufbauen kann.

Die Management-Entität 103 hat eine Rückruf-Funktionalität, d.h. sie ist ausgebildet, ansprechend auf eine Verbindungsanfrage 111 der Kommunikationsentität 105 zu einem ersten Zeitpunkt t1 zu überprüfen, ob der erste Zeitpunkt t1 in ein vorgegebenes Zeitintervall [tA; tB] fällt, zu dem das Kommunikationsendgerät 101 zur Kommunikation bereit ist, und falls der erste Zeitpunkt t1 nicht in das vorgegebene Zeitintervall [tA; tB] fällt, der Kommunikationsentität 105 eine Angabe 114 über eine Kommunikationszeit, zu der das Kommunikationsendgerät 101 zur Kommunikation bereit ist, zuzusenden.

Dies kann mittels der im Folgenden beschriebenen, in Figur 1 dargestellten Schritte 1) bis 4) realisiert werden.

Im Schritt 1 übermittelt die Kommunikationsentität 105 eine Verbindungsanfrage 111 über das Gateway 104 und die Management-Entität 103 zum UE 101. Im Falle von LTE kann das Gateway 104 z.B. das PDN GW und die Management-Entität 103 eine MME sein. Im Falle von UMTS/GSM kann das Gateway 104 der GGSN oder der SGSN oder ein ähnlicher Knoten sein.

Im Schritt 2 prüft der entsprechende Knoten der relevanten Paging Entität nach, ob bzw. wann das UE 101 das nächste Mal erreichbar ist. Dieser Knoten kann die Management-Entität 103 sein, im Falle von LTE also die MME.

Im Schritt 3 liefert die Management-Entität (beispielsweise die MME bei LTE) für den Fall dass das UE 101 nicht erreichbar ist, eine entsprechende Information 113 an das Gateway 104, (beispielsweise das PDN- GW bei LTE bzw. an den entsprechenden User Plane Knoten des SGSN/GGSN bei UMTS/GSM) zurück.

Im Schritt 4 übermittelt das Gateway 104 eine Angabe 114 eines Zeitintervalls an die Kommunikationsentität 105, in welchem das UE 101 für die Kommunikationsentität 105 erreichbar ist.

Die Kommunikationsentität 105 kann die Verbindung zum UE 101 dann in diesem Zeitintervall initiieren.

Mit diesem Call Back Mechanismus lassen sich die folgenden Vorteile realisieren: Der Datenverkehr zum UE 101 muss im Netzwerk 100 nicht mehr zwischengespeichert werden. Durch das "Scheduling", d.h. der planmäßigen Rückruf-Funktionalität, in der Management-Entität 103 wird eine effiziente Ausnutzung der Wachphase des UEs 101 gewährleistet, um mit dem UE 101 zu kommunizieren. Mehrere Kommunikationsentitäten 105 können auf dieser Basis für das UE 101 "gescheduled" werden, d.h. planmäßig zurückgerufen werden.

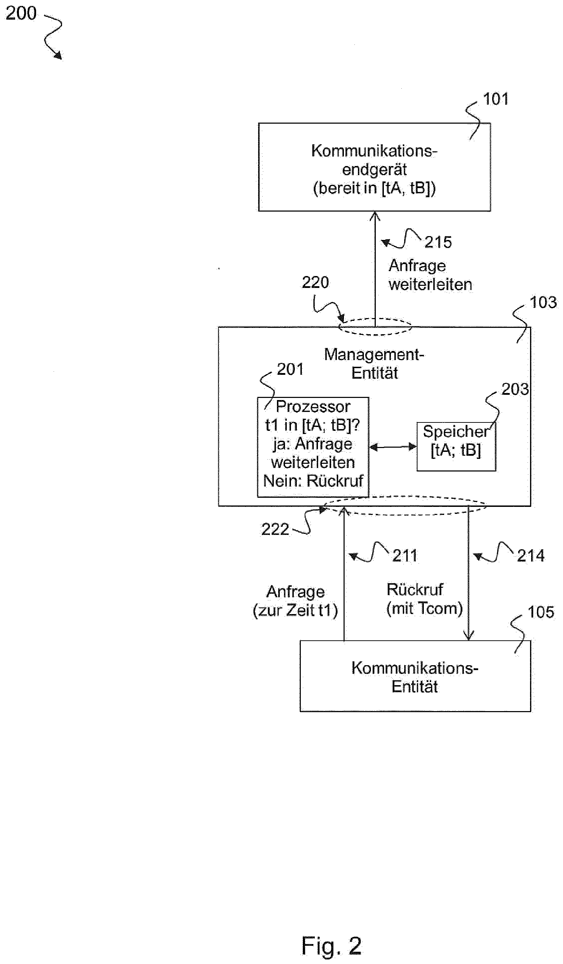

Fig. 2 zeigt eine schematische Darstellung eines Kommunikationsnetzwerks 200 mit Rückruf-Funktionalität in der Management-Entität gemäß einer beispielhaften Ausführungsform. Das Kommunikationsnetzwerk 200 umfasst ein Kommunikationsendgerät, beispielsweise ein Kommunikationsendgerät 101 wie oben zu Figur 1 beschrieben, eine Management-Entität, beispielsweise eine Management-Entität 103 wie oben zu Figur 1 beschrieben, und eine Kommunikationsentität, beispielsweise eine Kommunikationsentität 105 wie oben zu Figur 1 beschrieben.

Das Kommunikationsendgerät 101 ist in einem vorgegebenen Zeitintervall [tA; tB] zur Kommunikation bereit. Die Management-Entität 103 ist mit dem Kommunikationsendgerät 101 gekoppelt und in der Management-Entität 103 ist das vorgegebene Zeitintervall [tA; tB], zu dem das Kommunikationsendgerät 101 zur Kommunikation bereit ist gespeichert, beispielsweise in dem in Figur 2 gezeigten Speicher 203.

Die Kommunikationsentität 105 ist mit der Management-Entität 103 gekoppelt. Die Kommunikationsentität 105 überträgt zu einem ersten Zeitpunkt t1 eine Verbindungsanfrage 211 zum Aufbau einer Kommunikationsverbindung zu dem Kommunikationsendgerät 101 an die Management-Entität 103.

Die Management-Entität 103 überprüft ansprechend auf die Verbindungsanfrage 211 der Kommunikationsentität 105, ob der erste Zeitpunkt t1 in das vorgegebene Zeitintervall [tA; tB] fällt, zu dem das Kommunikationsendgerät 101 zur Kommunikation bereit ist, beispielsweise mittels des in Fig. 2 dargestellten Prozessors 201, der dazu auf den Speicher 203 zugreifen kann. Falls der erste Zeitpunkt t1 nicht in das vorgegebene Zeitintervall [tA; tB] fällt, sendet die Management-Entität 103 der Kommunikationsentität 105 eine Angabe 214 über eine Kommunikationszeit Tcom zu, zu der das Kommunikationsendgerät 101 zur Kommunikation bereit ist.

Die Management-Entität 103 leitet die Verbindungsanfrage 211 der Kommunikationsentität 105 an das Kommunikationsendgerät 101 weiter, falls der erste Zeitpunkt t1 in das vorgegebene Zeitintervall [tA; tB] fällt.

Die Angabe 214 über die Kommunikationszeit Tcom kann einen Zeitraum oder einen Zeitpunkt innerhalb des vorgegebenen Zeitintervalls [tA; tB] oder den gesamten Zeitraum innerhalb des vorgegebenen Zeitintervalls umfassen. Die Angabe 214 über die Kommunikationszeit Tcom kann ferner das vorgegebene Zeitintervall [tA; tB] anzeigen.

Die Kommunikationsentität 105 kann dann basierend auf der Angabe 214 über die Kommunikationszeit Tcom die Verbindungsanfrage 211 an die Management-Entität 103 so lange verzögern (oder erst dann aussenden), bis der (erneute) erste Zeitpunkt t1 des Aussendens der Verbindungsanfrage über die Management-Entität 103 an das Kommunikationsendgerät 101 in das vorgegebene Zeitintervall [tA; tB] fällt.

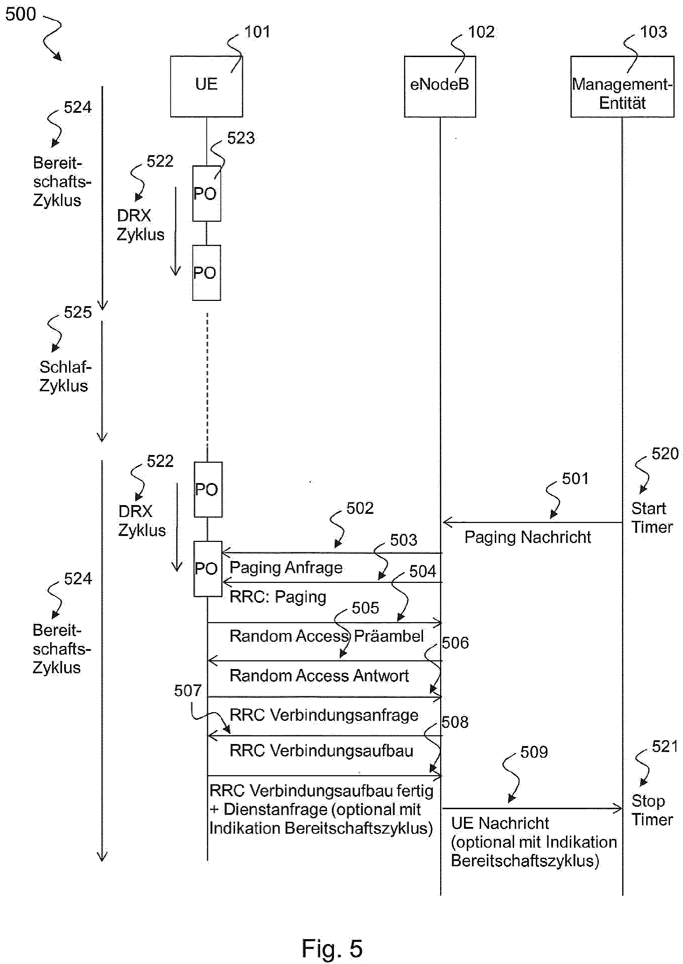

Das Kommunikationsnetzwerk 200 kann ferner eine Basisstation, beispielsweise einen eNodeB 102, wie oben zu Figur 1 beschrieben, umfassen, die ausgebildet ist, eine Paging-Anfrage, beispielsweise eine Paging-Anfrage 502, 503, wie unten zu Figur 5 beschrieben, an das Kommunikationsendgerät 101 zu senden. Das Kommunikationsendgerät 101 kann in dem vorgegebenen Zeitintervall [tA; tB], in dem es zur Kommunikation bereit ist, ansprechend auf die Paging-Anfrage 502, 503 einen Verbindungsaufbau mit der Basisstation 102 initiieren, beispielsweise entsprechend der Darstellung und zugehörigen Beschreibung in Figur 5.

Das Kommunikationsendgerät 101 kann außerhalb des vorgegebenen Zeitintervalls [tA; tB] einen Energiesparmodus einnehmen, in dem die Paging-Anfrage nicht empfangen und/oder nicht beantwortet wird oder keine Reaktion auf die Paging-Anfrage erfolgt, beispielsweise entsprechend der Darstellung und zugehörigen Beschreibung in Figur 5.

Die Management-Entität 103 kann das vorgegebene Zeitintervall [tA; tB], zu dem das Kommunikationsendgerät 101 zur Kommunikation bereit ist, basierend auf einer Nachricht von dem Kommunikationsendgerät 101, die anzeigt, dass die Verbindung zu der Basisstation 102 aufgebaut ist, beispielsweise eine Dienstanfrage des UE oder eine initiale UE Nachricht, wie unten zu Figur 5 näher beschrieben, aktualisieren.

Die Nachricht von dem Kommunikationsendgerät 101 kann optional das vorgegebene Zeitintervall [tA; tB], zu dem das Kommunikationsendgerät 101 zur Kommunikation bereit ist, anzeigen. Alternativ kann der Empfangszeitpunkt der genannten Nachricht bei der Management-Entität 103 einen Hinweis über das vorgegebene Zeitintervall [tA; tB] geben, derart, dass das Kommunikationsendgerät 101 zu diesem Empfangszeitpunkt kommunikationsbereit ist.

Die Management-Entität 103 kann eine Paging-Nachricht, beispielsweise eine Paging-Nachricht 501 wie in Figur 5 näher beschrieben, an die Basisstation 102 senden. Die Paging-Nachricht 501 kann ein Feld mit einem RNTI (Radio Network Temporary Identifier) zum Identifizieren des Funknetzwerks umfassen. Die Paging-Nachricht 501 kann das vorgegebene Zeitintervall [tA; tB], in dem das Kommunikationsendgerät 101 zur Kommunikation bereit ist, anzeigen, so dass die Basisstation das Paging zu einem Zeitpunkt innerhalb [tA; tB] ausführen kann. Die Basisstation kann dann die Paging-Anfrage 502, 503 an das Kommunikationsendgerät 101 innerhalb des in der Paging-Nachricht 501 angezeigten vorgegebenen Zeitintervalls [tA; tB] senden.

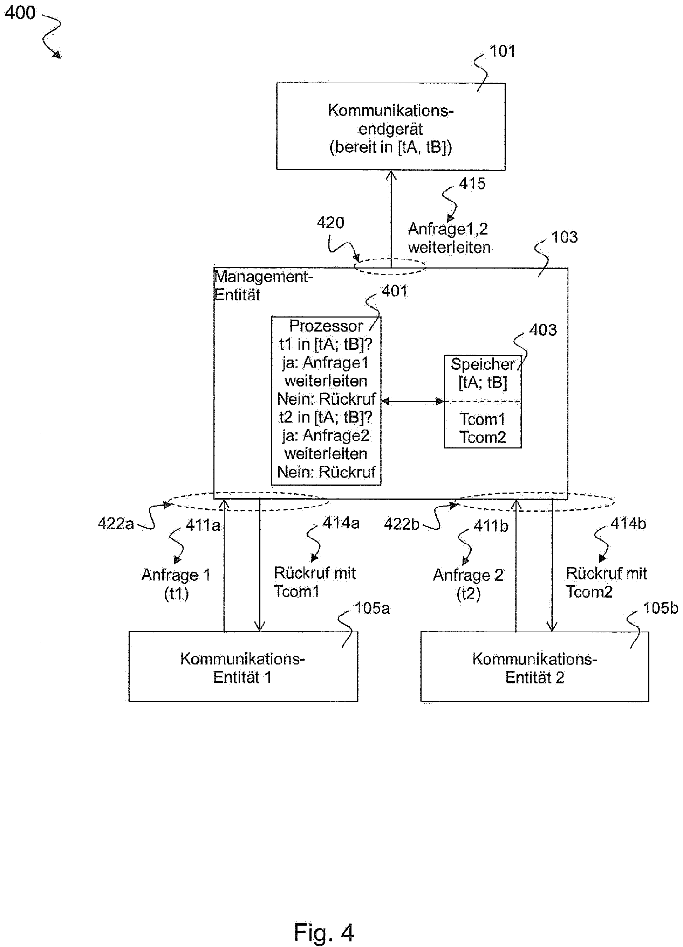

Die Management-Entität 103 kann ferner ansprechend auf eine Mehrzahl von Verbindungsanfragen einer Mehrzahl von Kommunikationsentitäten, beispielsweise wie unten zu Figur 4 beschrieben, den jeweiligen Kommunikationsentitäten Angaben mit verschiedene Kommunikationszeiten innerhalb des vorgegebenen Zeitintervalls [tA; tB], zu dem das Kommunikationsendgerät 101 zur Kommunikation bereit ist, zusenden.

Das Kommunikationsendgerät 101 kann beispielsweise einen Sensor umfassen, der Messdaten erfassen kann und ansprechend auf einen Steuerbefehl der Kommunikationsentität 105, die Messdaten an die Kommunikationsentität 105 übertragen kann.

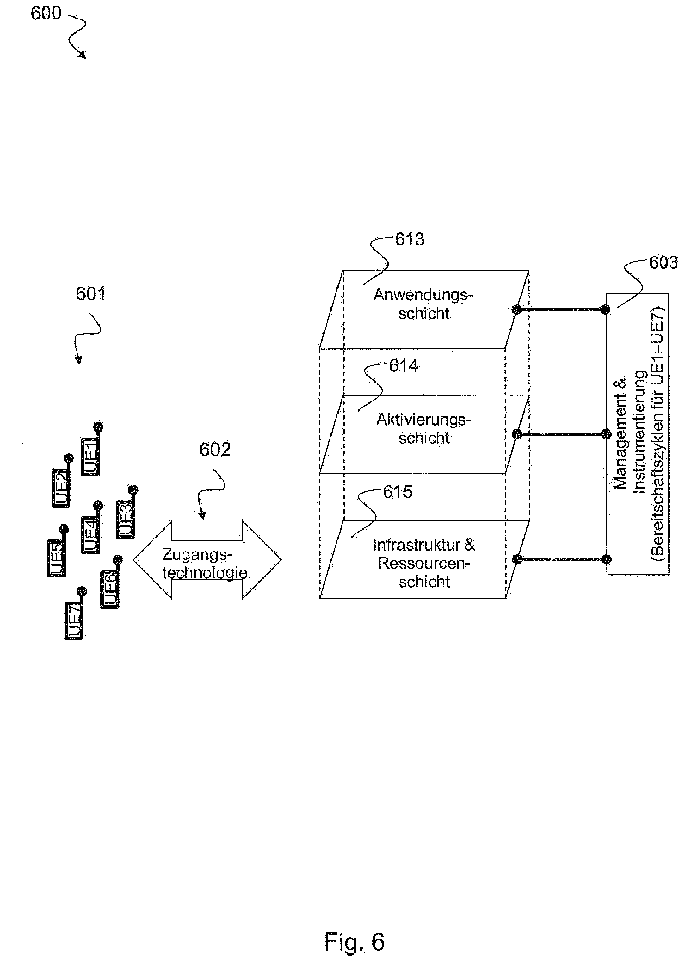

Das Kommunikationsnetzwerk 200 kann ein Netzwerk einer fünften Generation (5G) oder einer weiteren Generation sein, beispielsweise wie unten zu Figur 6 näher beschrieben und die Management-Entität 103 kann in einer Management und Instrumentierungsschicht 603 des Kommunikationsnetzwerkes 200 angeordnet sein.

In einer Ausführungsform umfasst die Management-Entität 103 eine erste Schnittstelle 220 zu dem Kommunikationsendgerät 101, einen Speicher 203, in dem eine Information über das vorgegebene Zeitintervall [tA; tB], in dem das Kommunikationsendgerät 101 zur Kommunikation bereit ist, abgelegt ist, eine Schnittstelle 222 zu der Kommunikations-Entität 105 und einen Prozessor 201. Die Kommunikationsentität 105 kann zu einem ersten Zeitpunkt t1 eine Verbindungsanfrage 211 zum Aufbau einer Kommunikationsverbindung mit dem Kommunikationsendgerät 101 an die Management-Entität 103) übertragen. Der Prozessor 201 kann ansprechend auf die Verbindungsanfrage 211 der Kommunikationsentität 105 überprüfen, ob der erste Zeitpunkt t1 in das vorgegebene Zeitintervall [tA; tB] fällt, zu dem das Kommunikationsendgerät 101 zur Kommunikation bereit ist, und falls der erste Zeitpunkt t1 nicht in das vorgegebene Zeitintervall [tA; tB] fällt, der Kommunikationsentität 105 eine Angabe 214 über eine Kommunikationszeit Tcom, zu der das Kommunikationsendgerät 101 zur Kommunikation bereit ist, zusenden.

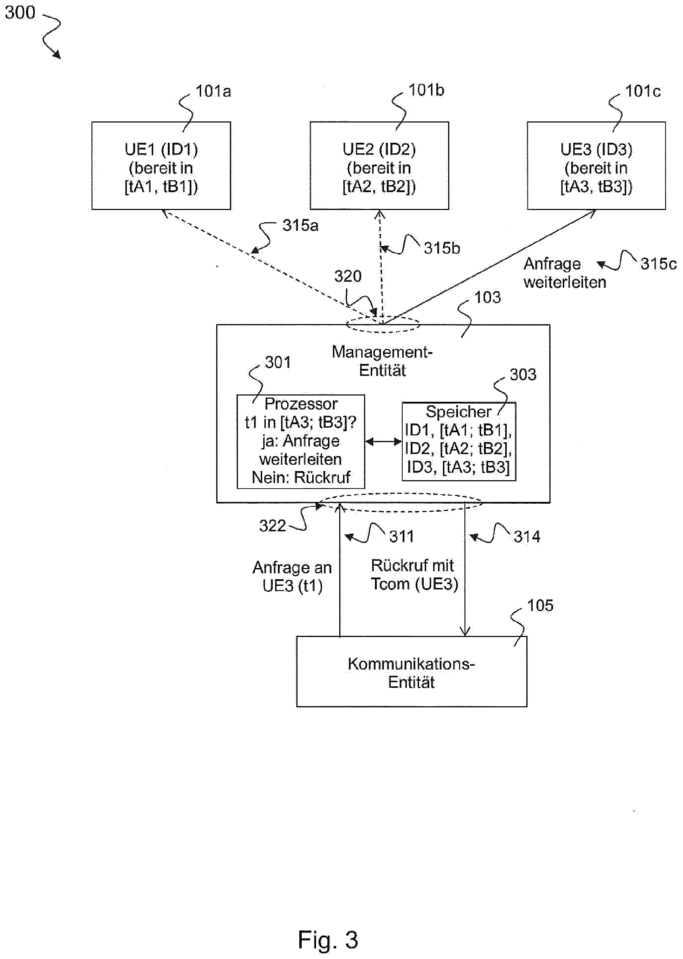

Fig. 3 zeigt eine schematische Darstellung eines Kommunikationsnetzwerks 300 mit einer Kommunikationsentität, mehreren Kommunikationsendgeräten und einer Management-Entität mit Rückruf-Funktionalität gemäß einer beispielhaften Ausführungsform.

Das Kommunikationsnetzwerk 300 entspricht dem oben zu Figur 2 beschriebenen Kommunikationsnetzwerk 200, wobei in der Management-Entität 103 hier die vorgegebenen Zeitintervalle verschiedener Kommunikationsentitäten 101a, 101b, 101c, die über die Management-Entität 103 erreichbar sind bzw. mit dieser gekoppelt sind, gespeichert sind. Die Management-Entität 103 umfasst einen Speicher 303, in dem beispielsweise drei (oder jede andere Zahl) vorgegebene Zeiträume [tA1; tB1], [tA2; tB2], [tA3; tB3] von drei (oder jede andere Zahl) UEs 101a, 101b, 101c zusammen mit den jeweiligen Identifikationen der UEs 101a, 101b, 101c gespeichert sind. Sendet die Kommunikationsentität 105 eine Anfrage 311 an ein bestimmtes UE, zum Beispiel an UE3 mit der Identifikation ID3, zum Aufbau einer Kommunikationsverbindung zum Zeitpunkt t1, so bestimmt der Prozessor 301 zuerst, ob eine Eintrag mit der Identifikation ID3 im Speicher vorhanden ist, und falls ja, ob die Zeit t1 in das im Speicher gespeicherte zugehörige vorgegebene Zeitintervall [tA3, tB3] fällt, in dem UE3 101c kommunikationsbereit ist. Ist die der Fall, so wird die Anfrage 311 an UE3 101c weitergeleitet 315c. Ist dies nicht der Fall, so teilt die Management-Entität 103 der Kommunikations-Entität 105 eine Kommunikationszeit Tcom3 mit 314, zu der das UE3 zur Kommunikation bereit ist, d.h. nutzt die in der Management-Entität 103 implementierte Rückruf-Funktionalität.

Der Prozessor 301 kann die Zeit t1 beispielsweise einem Datenfeld aus der Anfrage 311 entnehmen, welches die Zeit anzeigt, in der die Anfrage 311 abgesendet wurde. Die Anfrage 311 kann beispielsweise eine Internet-Protokoll Nachricht sein, z.B. eine RTP Nachricht, in welcher der Absendezeitpunkt protokolliert ist. Alternativ kann der Prozessor 301 die Zeit t1 als den Zeitpunkt bestimmen, zu dem die Anfrage 311 beim Prozessor 301 eintrifft, beispielsweise über eine in der Management-Entität 103 implementierte Zeitbasis.

Zwischen Management-Entität 103 und Kommunikations-Entität 105 können weitere Netzknoten gekoppelt sein, beispielsweise ein oder mehrere Gateways 104, wie in Figur 1 beschrieben. Zwischen Management-Entität 103 und UEs 101a, 101b, 101c kann ein Funkzugangsnetz mit einer oder mehreren Basisstationen 102 geschaltet sein, beispielsweise gemäß der Beschreibung zu Figur 1 und 5.

Alternativ können die UEs 101a, 101b, 101c auch feste Kommunikationseinrichtungen sein, beispielsweise in einem Gebäudenetz im Gebäude angebrachte Sensoren, an einem bestimmten Ort aufgestellte Dienstleistungseinrichtungen, wie z.B. Fahrkartenautomaten etc. Alternativ können die UEs 101a, 101b, 101c auch über ein Festnetz, z.B. POTS oder ISDN oderxDSL, etc. an die Management-Entität 103 angeschlossen sein. Auch in diesem Szenario sind Anwendungsfälle möglich, bei denen fest aufgestellte Kommunikationsendgeräte nur zu bestimmten Zeitintervallen erreichbar sind und die Management-Entität mittels Rückruf-Funktionalität darüber informiert. Anwendungsfälle sind beispielsweise Server wie Email-Server, die Nachrichten nur innerhalb der Dienstzeit bzw. Geschäftszeit des Empfängers weiterleiten.

Fig. 4 zeigt eine schematische Darstellung eines Kommunikationsnetzwerks 400 mit zwei Kommunikationsentitäten einem Kommunikationsendgerät und einer Management-Entität mit Rückruf-Funktionalität gemäß einer beispielhaften Ausführungsform.

Das Kommunikationsnetzwerk 400 entspricht dem oben zu Figur 2 beschriebenen Kommunikationsnetzwerk 200, wobei die Management-Entität 103 hier über zwei (oder mehrere) Schnittstellen 422a, 422b mit zwei (oder mehreren) Kommunikations-Entitäten 105a, 105b gekoppelt ist. Der Prozessor 401 ist so ausgeführt, dass er verschiedene Verbindungsanfragen von verschiedenen Kommunikations-Entitäten 105a, 105b beantworten kann.

So kann der Prozessor 401 in der Management-Entität 103 ansprechend auf die erste Verbindungsanfrage 411a der ersten Kommunikationsentität 105a überprüfen, ob der erste Zeitpunkt t1, zu dem die erste Verbindungsanfrage 411a gesendet wurde, in das vorgegebene Zeitintervall [tA; tB] fällt, zu dem das Kommunikationsendgerät 101 zur Kommunikation bereit ist, und falls der erste Zeitpunkt t1 nicht in das vorgegebene Zeitintervall [tA; tB] fällt, der ersten Kommunikationsentität 105a eine Angabe 414a über eine erste Kommunikationszeit Tcom1, zu der das Kommunikationsendgerät 101 zur Kommunikation bereit ist, zusenden.

Der Prozessor 401 kann ferner ansprechend auf die zweite Verbindungsanfrage 411b der zweiten Kommunikationsentität 105b überprüfen, ob der zweite Zeitpunkt t2, zu dem die zweite Verbindungsanfrage 411b gesendet wurde, in das vorgegebene Zeitintervall [tA; tB] fällt, zu dem das Kommunikationsendgerät 101 zur Kommunikation bereit ist, und falls der zweite Zeitpunkt t2 nicht in das vorgegebene Zeitintervall [tA; tB] fällt, der zweiten Kommunikationsentität 105b eine Angabe 414b über eine zweite Kommunikationszeit Tcom2, zu der das Kommunikationsendgerät 101 zur Kommunikation bereit ist, zusenden.

Die erste Kommunikationszeit Tcom1 und die zweite Kommunikationszeit Tcom2 können Zeitpunkte oder Zeitabschnitte innerhalb des vorgegebenen Zeitintervalls [tA; tB] sein, zu dem das Kommunikationsendgerät zur Kommunikation bereit ist. Die Management-Entität kann beide Kommunikationszeiten Tcom1 und Tcom2 in dem Speicher 403 speichern und die Angabe 414b über die zweite Kommunikationszeit Tcom2 beispielsweise abhängig von der Angabe 414a über die erste Kommunikationszeit Tcom1 absenden, um Konflikte zwischen den beiden Kommunikationsentitäten 105a, 105b beim Verbindungsaufbau mit dem Kommunikationsendgerät 101 zu vermeiden. Alternativ kann die Management-Entität 103 den Kommunikationsaufbau so steuern, dass die Kommunikationsverbindung zu dem Kommunikationsendgerät 101 nur einmal aufgebaut werden muss und die Kommunikationsentitäten 105a, 105b nacheinander über die aufgebaute Kommunikationsverbindung mit dem Kommunikationsendgerät 101 kommunizieren können.

In einer weiteren Ausführungsform ist die Management-Entität 103 so ausgeführt, dass sie zwischen mehreren Kommunikations-Entitäten 105a, 105b wie in Figur 4 beschrieben und mehreren Kommunikationsendgeräten 101a, 101b, 101c wie in Figur 3 beschrieben einen Rückruf vermitteln kann. D.h. eine Kombination der in den Figuren 3 und 4 beschriebenen Kommunikationsnetze 300, 400 ist möglich.

Fig. 5 zeigt eine schematische Darstellung eines Verfahrens zum Aufbau einer Kommunikationsverbindung von Management-Entität über eNodeB zu UE gemäß einer beispielhaften Ausführungsform.

Das Kommunikationsnetzwerk 500 entspricht den oben zu den Figuren 1 und 2 beschriebenen Kommunikationsnetzwerken 100, 200, wobei die Management-Entität 103 über eine Basisstation bzw. eNodeB 102 mit dem UE 101 bzw. Kommunikationsendgerät gekoppelt ist. Das UE 101 ist in einem Bereitschaftszyklus 524, der dem oben zu den Figuren 1 bis 4 genannten vorgegebenen Zeitintervall entspricht, zur Kommunikation bereit und in einem Schlafzyklus 525 in einem Energiesparmode bzw. abgeschaltet und dann nicht zur Kommunikation bereit. Der Bereitschaftszyklus 524 kann eine Mehrzahl von DRX (Diskontinuierlicher Empfangsmodus) Zyklen 522 mit jeweils mehreren sogenannten "Paging Occasions" (PO) umfassen, beispielsweise gemäß 3GPP, in welchen das UE 101 auf Paging Nachrichten von der Basisstation 102 hört bzw. bereit ist, diese zu empfangen. Wenn das UE 101 im RRC IDLE mode ist, nutzt es DRX um seinen Leistungsverbrauch zu reduzieren. Der DRX Zyklus bestimmt wie oft das UE nach Paging-Nachrichten hört. Der DRX Zyklus kann beispielsweise Werte von 32, 64, 128 oder 256 Funkrahmen umfassen, entsprechend Zeitintervallen von 320, 640, 1280 oder 2560 Millisekunden.

Wie in Figur 5 gezeigt, ist die Management-Entität 103 dafür verantwortlich, die Paging-Prozedur zu initiieren. Dies macht sie durch Übertragen einer Paging Nachricht 501 an einen oder mehrere eNodeBs 102. Die Paging Nachricht 501 kann beispielsweise eine S1AP Paging Nachricht sein und so aufgebaut sein, wie in Tabelle 1 dargestellt.

**Tabelle 1: Beispiel für den Aufbau der Paging-Nachricht 501**

| Informations-Element (IE) | Wert |
|---|---|
| UE Identifikationsindex | 0 - 1023 |
| UE Paging Identifikation | S-TMSI oder IMSI |
| Paging DRX Zyklus | 32, 64, 128, 256 |
| Netzwerkdomäne | PS oder CS |
| Liste von Tracking Area Identifikationen (TAI) | 1 - 256 Instanzen |
| Liste von geschlossenen Teilnehmergruppen Identifikationen (CSG) | 0 - 256 Instanzen |
| Optional: Zeitintervall, zu dem UE kommunikationsbereit ist | Startzeit Bereitschaftszyklus, Zeitdauer Bereitschaftszyklus, Zeitdauer Schlafzyklus |

Mit dem in der Paging-Nachricht 501 optional angegebenen Zeitintervall, zu dem das UE 101 kommunikationsbereit ist, kann die Management-Entität 103 das Paging für die entsprechende UE 101 optional in diesem Zeitintervall starten, um so unnötigen Datenverkehr auf der Luftschnittstelle einzusparen.

Die Management-Entität 103 kann die Paging-Nachricht 501 an mehrere eNodeBs 102 weiterleiten, denn das UE 101 kann bei mehreren eNodeBs 102 angemeldet sein. Nach dem Aussenden der Paging-Nachricht 501 kann die Management-Entität 103 einen Timer 520 starten. Der eNodeB 102 empfängt diese Paging-Nachricht 501 von der Management-Entität 103 und generiert eine Paging Anfrage 502 mit einem P-RNTI (Paging Radio Network Temporary Identifier) an das UE 101, in welcher dem UE 101 mitgeteilt wird, dass eine RRC (Radio Resource Control, Funkressourcensteuerung) Paging Nachricht 503 auf dem Paging-Kanal vorliegt.

Daraufhin sendet das UE 101 eine Random Access (RA) Präambel 504 an den eNodeB 102, welcher mit einer RA Antwort antwortet, um eine Funkkanalressource zu belegen. Das UE sendet eine RRC Verbindungsanfrage 507 über die Funkkanalressource an den eNodeB 102, welcher einen Verbindungsaufbau über den Funkkanal bestätigt 508. Schließlich antwortet das UE 101 mit einer Bestätigung 508, dass der Verbindungsaufbau über den Funkkanal fertig ist und sendet eine Dienstanfrage an den eNodeB. Optional kann diese Bestätigung 508 das Zeitintervall umfassen, zu dem das UE kommunikationsbereit ist.

Der eNodeB 102 leitet diese Nachricht 508 weiter an die Management-Entität 103, die nach Empfang dieser weitergeleiteten UE Nachricht 509 den aufgesetzten Timer wieder stoppen 521 kann. Die weitergeleitete UE Nachricht 509 kann optional das Zeitintervall umfassen, zu dem das UE kommunikationsbereit ist, welches dann in der Management-Entität 103 gespeichert werden kann. Die Management-Entität 103 kann damit einen Rückruf auslösen, wie oben zu den Figuren 1 bis 4 näher beschrieben. Alternativ kann der Zeitpunkt des Eintreffens der UE-Nachricht 509 bei der Management-Entität 103 als ein Zeitpunkt innerhalb des Bereitschaftszyklus 524 des UE 101 erfasst werden. Alternativ kann das Zeitintervall zwischen Start Timer 520 und Stop Timer 521 als ein Zeitintervall innerhalb des Bereitschaftszyklus 524 des UE 101 erfasst werden.

Der Zeitpunkt des Eintreffens der UE-Nachricht 509 bei der Management-Entität 103 bzw. das Zeitintervall zwischen Start Timer 520 und Stop Timer 521 gibt nicht nur Aufschluss über den Bereitschaftszyklus 524 des UE 101, sondern auch über den DRX Zyklus 522 des UE 101 und den genauen Zeitpunkt der Paging Occasion 523. Dies kann ebenfalls in der Management-Entität 103 gespeichert werden, um in einem Rückruf nicht nur den Bereitschaftszyklus 524 sondern auch den DRX Zyklus 522 und/oder das genaue Intervall der Paging Occasion 523 der Kommunikations-Entität 105 mitzuteilen, die eine Kommunikationsverbindung zu dem UE 101 aufbauen möchte.

Fig. 6 zeigt eine schematische Darstellung des Schichtenaufbaus eines 5G-Kommunikationsnetzwerks 600 bzw. einer 5G Systemarchitektur gemäß einer beispielhaften Ausführungsform mit Management und Instrumentierungsschicht 603, in der beispielhaft eine Rückruffunktionalität implementiert sein kann.

Die 5G Systemarchitektur 600 umfasst einen Bereich mit 5G Kommunikationsendgeräten 601, die über verschiedene Zugangstechnologien 602 mit einer mehrschichtigen Kommunikationsstruktur verbunden sind, welche eine Infrastruktur- & Ressourcenschicht 615, eine Aktivierungsschicht 614 und eine Anwendungsschicht 613 umfasst, die über eine Management- & Instrumentierungsebene 603 verwaltet werden, in der eine Rückruf-Funktionalität wie oben zu den Figuren 1 bis 5 beschrieben, implementiert sein kann.

Die Infrastruktur- & Ressourcenschicht 615 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 614, 613 und der Management- & Instrumentierungsebene 603 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 614 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 603 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 613 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene bzw. -schicht 603 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Der Aufbau dieser dedizierten Netzwerk Slices kann gesteuert durch die Rückruf-Funktionalität in der Management- & Instrumentierungsebene 603 beispielsweise erst dann erfolgen, wenn das oder die UEs 601, mit denen kommuniziert werden soll, auch dazu bereit sind, d.h. zu dem in der Management- & Instrumentierungsschicht 603 gespeicherten vorgegebenen Zeitintervall, zu dem das entsprechende UE zur Kommunikation bereit ist.

Die Management- & Instrumentierungsebene 603 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren. Eine dieser modularen Funktionen kann die oben zu den Figuren 1 bis 5 beschriebene Rückruf-Funktionalität umfassen.

Die Infrastruktur- & Ressourcenschicht 615 umfasst alle physikalischen Aktiva, die einem Netzwerkbetreiber zugeordnet sind, d.h. Standorte, Kabel, Netzwerkknoten etc. Diese Schicht 615 bildet die Grundlage für alle Netzwerk Slices. Sie ist so generisch wie möglich aufgebaut ohne zu viele spezialisierte physikalische Einheiten. Die Infrastruktur- & Ressourcenschicht 615 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 615 basieren auf Hardware und Software bzw. Firmware, die für die jeweilige Operation benötigt wird und dabei als Infrastruktur- & Ressourcenschicht 615 den darüber liegenden Schichten als Ressourcenobjekte zu Verfügung gestellt wird. Beispielsweise umfassen Objekte der Infrastruktur- & Ressourcenschicht 615 virtuelle Maschinen, virtuelle Links bzw. Verbindungen und virtuelle Netzwerke, z.B. virtuelle Zugangsknoten, virtuelle Netzwerkknoten und virtuelle Computerknoten. Wie der Begriff "virtuell" bereits sagt, stellt die Infrastruktur- & Ressourcenschicht 615 die Objekte in der Form einer "Infrastruktur als Dienst", d.h. in einer abstrahierenden, virtualisierten Form der nächsthöheren Schicht zur Verfügung. Dieses Zur Verfügung stellen kann ebenso gesteuert durch die Management- & Instrumentierungsebene 603 zu dem Zeitpunkt erfolgen, zu dem die jeweils angesprochenen UEs 601 auch kommunikationsbereit sind, d.h. innerhalb des vorgegebenen Zeitintervalls, wie oben zu den Figuren 1 bis 5 beschrieben.

Die Aktivierungsschicht 614 ist oberhalb der Infrastruktur- & Ressourcenschicht 615 angeordnet. Sie nutzt die Objekte der Infrastruktur- & Ressourcenschicht 615 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 613 bereitzustellen. Dieses Hinzufügen von Funktionalität durch die Aktivierungsschicht 614 kann beispielsweise gesteuert durch die Management- & Instrumentierungsebene 603 zu dem Zeitpunkt erfolgen, zu dem die jeweils angesprochenen UEs 601 auch kommunikationsbereit sind, d.h. innerhalb des vorgegebenen Zeitintervalls, wie oben zu den Figuren 1 bis 5 beschrieben.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 614 verschiedene abstrahierte Objekte mit anderen abstrahierten Objekten und mit virtuellen Netzwerkfunktionen kombiniert werden, um kombinierte Objekte zu bilden, die in aggregierte Objekten überführt werden können und in einer Objektbibliothek der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 614, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann. Dieses Erzeugen und zur Verfügung stellen von Objekten durch die Aktivierungsschicht 614 kann ebenfalls gesteuert durch die Management- & Instrumentierungsebene 603 zu dem Zeitpunkt erfolgen, zu dem die jeweils angesprochenen UEs 601 auch kommunikationsbereit sind, d.h. innerhalb des vorgegebenen Zeitintervalls, wie oben zu den Figuren 1 bis 5 beschrieben.

Ein Netzwerk Slice kann dabei als software-definierte Entität betrachtet werden, die auf einem Satz von Objekten basiert, welche ein vollständiges Netzwerk definieren. Die Aktivierungsschicht 614 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 614 kann als eine Art von Netzwerk-Betriebssystem betrachtet werden komplementiert durch eine Netzwerkerzeugungsumgebung. Eine wesentliche Aufgabe der Aktivierungsschicht 614 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 614 beim Entwickeln der Netzwerk Slices Umgebung. Das Erzeugen der Netzwerk Slices durch die Aktivierungsschicht 614 wie oben beschrieben kann ebenfalls gesteuert durch die Management- & Instrumentierungsebene 603 zu dem Zeitpunkt erfolgen, zu dem die jeweils angesprochenen UEs 601 auch kommunikationsbereit sind, d.h. innerhalb des vorgegebenen Zeitintervalls, wie oben zu den Figuren 1 bis 5 beschrieben.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Das oben beschriebenen Erzeugen und Bereitstellen der verschiedenen Netzwerkkonfigurationen durch die Aktivierungsschicht 614 wie oben beschrieben kann ebenfalls gesteuert durch die Management- & Instrumentierungsebene 603 zu dem Zeitpunkt erfolgen, zu dem die jeweils angesprochenen UEs 601 auch kommunikationsbereit sind, d.h. innerhalb des vorgegebenen Zeitintervalls, wie oben zu den Figuren 1 bis 5 beschrieben.

Die Anwendungsschicht 613 umfasst alle erzeugten Netzwerk Slices und bietet diese als "Netzwerk als Service" verschiedenen Netzwerknutzern, z.B. verschiedenen Kunden an. Das Konzept erlaubt die Wiederbenutzung von definierten Netzwerk Slices für verschiedene Anwender, z.B. Kunden, beispielsweise als eine neue Netzwerk Slice Instanz. D.h. ein Netzwerk Slice, welcher beispielsweise einer Automotive Anwendung zugeordnet ist, kann auch für Anwendungen verschiedener anderer industrieller Anwendungen genutzt werden. Die Slices Instanzen, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

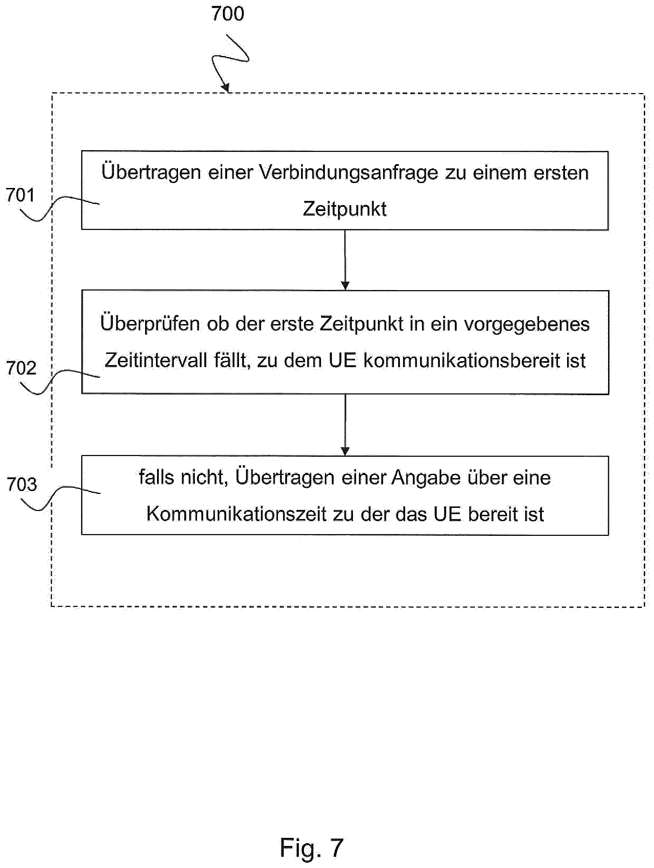

Fig. 7 zeigt eine schematische Darstellung eines Verfahrens 700 zum Kommunikationsaufbau zwischen einer Kommunikationsentität und einem Kommunikationsendgerät, das in einem vorgegebenen Zeitintervall [tA; tB] zur Kommunikation bereit ist, über eine Management-Entität mit Rückruf-Funktionalität gemäß einer beispielhaften Ausführungsform.

Das Verfahren 700 umfasst ein Übertragen 701 einer Verbindungsanfrage zum Aufbau einer Kommunikationsverbindung mit dem Kommunikationsendgerät von der Kommunikationsentität zu einer Management-Entität zu einem ersten Zeitpunkt t1, wobei der Management-Entität das vorgegebene Zeitintervall [tA; tB], zu dem das Kommunikationsendgerät zur Kommunikation bereit ist, bekannt ist. Die Management-Entität kann der oben in Figuren 1 bis 5 beschriebenen Management-Entität entsprechen.

Das Verfahren 700 umfasst ferner ein Überprüfen 702 durch die Management-Entität, ob der erste Zeitpunkt t1 in das vorgegebene Zeitintervall [tA; tB] fällt, zu dem das Kommunikationsendgerät zur Kommunikation bereit ist.

Das Verfahren 700 umfasst einen weiteren Schritt 703, nämlich: falls der erste Zeitpunkt t1 nicht in das vorgegebene Zeitintervall [tA; tB] fällt, Übertragen 703 einer Angabe über eine Kommunikationszeit, zu der das Kommunikationsendgerät zur Kommunikation bereit ist, von der Management-Entität an die Kommunikationsentität.

Das Verfahren 700 kann beispielsweise in einem Kommunikationsnetzwerk, wie in den Figuren 1 bis 6 beschrieben, eingesetzt werden.

Das Kommunikationsnetzwerk 200 kann beispielsweise ein Netzwerk einer fünften Generation (5G) oder einer weiteren Generation sein, wie z.B. in Figur 6 beschrieben.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 7 beschriebene Verfahren 700 oder die zu den Figuren 1 bis 6 beschriebenen Vorgänge ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 700 auszuführen oder die Netzkomponenten der in den Figuren 1 bis 6 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 6 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Kommunikationsnetzwerk bzw. Kommunikationssystem
- 101:: Zugangsgerät, Kommunikationsendgerät, UE
- 102:: eNodeB bzw. Basisstation, BS
- 103:: Management-Entität mit Rückruf-Funktionalität
- 104:: Gateway
- 105:: Kommunikations-Entität
- 111:: Verbindungsanfrage
- 112:: Weiterleitung der Verbindungsanfrage
- 113:: Information mit Kommunikationszeit
- 114:: Rückruf mit Angabe der Kommunikationszeit

- 200:: Kommunikationsnetzwerk bzw. Kommunikationssystem
- 211:: Verbindungsanfrage (zur Zeit t1)
- 215:: Weiterleitung der Verbindungsanfrage an Kommunikationsendgerät
- 214:: Rückruf mit Angabe der Kommunikationszeit
- 201:: Prozessor in der Management-Entität
- 203:: Speicher in der Management-Entität
- 220:: Schnittstelle der Management-Entität zum Kommunikationsendgerät (über eNodeB)
- 222:: Schnittstelle der Management-Entität zur Kommunikationsentität

- 300:: Kommunikationsnetzwerk bzw. Kommunikationssystem
- 101a:: erstes Zugangsgerät, Kommunikationsendgerät, UE
- 101b:: zweites Zugangsgerät, Kommunikationsendgerät, UE
- 101c:: drittes Zugangsgerät, Kommunikationsendgerät, UE
- 311:: Verbindungsanfrage (zur Zeit t1)
- 315a:: Weiterleitung der Verbindungsanfrage an Kommunikationsendgerät UE1
- 315b:: Weiterleitung der Verbindungsanfrage an Kommunikationsendgerät UE2
- 315c:: Weiterleitung der Verbindungsanfrage an Kommunikationsendgerät UE3
- 314:: Rückruf mit Angabe der Kommunikationszeit
- 301:: Prozessor in der Management-Entität
- 303:: Speicher in der Management-Entität
- 320:: Schnittstelle der Management-Entität zu den Kommunikationsendgeräten (über eNodeBs)
- 322:: Schnittstelle der Management-Entität zur Kommunikationsentität

- 400:: Kommunikationsnetzwerk bzw. Kommunikationssystem
- 105a:: erste Kommunikationsentität
- 105b:: zweite Kommunikationsentität
- 411a:: erste Verbindungsanfrage (zur Zeit t1) von erster Kommunikationsentität
- 411b:: zweite Verbindungsanfrage (zur Zeit t2) von zweiter Kommunikationsentität
- 415:: Weiterleitung der ersten, zweiten Verbindungsanfrage an Kommunikationsendgerät
- 414a:: erster Rückruf mit Angabe der ersten Kommunikationszeit Tcom1 an erste Kommunikationsentität
- 414b:: zweiter Rückruf mit Angabe der zweiten Kommunikationszeit Tcom2 an zweite Kommunikationsentität
- 401:: Prozessor in der Management-Entität
- 403:: Speicher in der Management-Entität
- 420:: Schnittstelle der Management-Entität zum Kommunikationsendgerät (über eNodeB)
- 422a:: Schnittstelle der Management-Entität zur ersten Kommunikationsentität
- 422b:: Schnittstelle der Management-Entität zur zweiten Kommunikationsentität

- 500:: Kommunikationsnetzwerk bzw. Kommunikationssystem
- 501:: Paging Nachricht
- 502:: Paging Anfrage
- 503:: RRC: Paging
- 504:: Random Access Präambel
- 505:: Random Access Antwort
- 506:: RRC Verbindungsanfrage
- 507:: RRC Verbindungsaufbau
- 508:: RRC Verbindungsaufbau fertig und Dienstanfrage
- 509:: UE Nachricht
- 520:: Start Timer
- 521:: Stop Timer
- 522:: DRX Zyklus
- 523:: Paging Occasion, PO
- 524:: Bereitschaftszyklus bzw. vorgegebenes Zeitintervall, in dem UE zur Kommunikation bereit ist
- 525:: Schlafzyklus des UE

- 600:: 5G Systemarchitektur bzw. 5G Kommunikationsnetzwerk
- 601:: Zugangsgerät, Kommunikationsendgerät, UE
- 602:: Zugangstechnologie
- 613:: Anwendungsschicht
- 614:: Aktivierungsschicht
- 615:: Infrastruktur & Ressourcenschicht
- 603:: Management & Instrumentierungsschicht

- 700:: Verfahren zum Kommunikationsaufbau zwischen Kommunikationsentität und Kommunikationsendgerät, das in vorgegebenen Zeitintervall kommunikationsbereit ist
- 701:: erster Schritt: Übertragen Verbindungsanfrage
- 702:: zweiter Schritt: Überprüfen ob erster Zeitpunkt in vorgegebenes Zeitintervall fällt
- 703:: dritter Schritt: falls nicht, Übertragen einer Angabe über eine Kommunikationszeit, zu der das Kommunikationsendgerät kommunikationsbereit ist

## Patentansprüche

1. Schnurloses Kommunikationsnetzwerk (200) mit:
einem Kommunikationsendgerät (101), das in einem vorgegebenen Zeitintervall ([tA; tB]) zur Kommunikation bereit ist;
einer Management-Entität (103), die mit dem Kommunikationsendgerät (101) gekoppelt ist, wobei in der Management-Entität (103) das vorgegebene Zeitintervall ([tA; tB]), zu dem das Kommunikationsendgerät (101) zur Kommunikation bereit ist, gespeichert ist; und
einer Kommunikationsentität (105), die mit der Management-Entität (103) gekoppelt ist, wobei die Kommunikationsentität (105) ausgebildet ist, zu einem ersten Zeitpunkt (t1) eine Verbindungsanfrage (211) zum Aufbau einer Kommunikationsverbindung zu dem Kommunikationsendgerät (101) an die Management-Entität (103) zu übertragen,
wobei die Management-Entität (103) ausgebildet ist, ansprechend auf die Verbindungsanfrage (211) der Kommunikationsentität (105) zu überprüfen, ob der erste Zeitpunkt (t1) in das vorgegebene Zeitintervall ([tA; tB]) fällt, zu dem das Kommunikationsendgerät (101) zur Kommunikation bereit ist, und falls der erste Zeitpunkt (t1) nicht in das vorgegebene Zeitintervall ([tA; tB]) fällt, der Kommunikationsentität (105) eine Angabe (214) über eine Kommunikationszeit (Tcom), zu der das Kommunikationsendgerät (101) zur Kommunikation bereit ist, zuzusenden,
**dadurch gekennzeichnet:**
**dass** die Management-Entität (103) so ausgebildet ist, ansprechend auf eine Mehrzahl von Verbindungsanfragen (411a, 411b) einer Mehrzahl von Kommunikationsentitäten (105a, 105b) den jeweiligen Kommunikationsentitäten (105a, 105b) Angaben (414a, 414b) mit verschiedenen Kommunikationszeiten (Tcom1, Tcom2) innerhalb des vorgegebenen Zeitintervalls ([tA; tB]), zu dem das Kommunikationsendgerät (101) zur Kommunikation bereit ist, zuzusenden.

2. Kommunikationsnetzwerk (200) nach Anspruch 1,
wobei die Management-Entität (103) ausgebildet ist, die Verbindungsanfrage (211) der Kommunikationsentität (105) an das Kommunikationsendgerät (101) weiterzuleiten, falls der erste Zeitpunkt (t1) in das vorgegebene Zeitintervall ([tA; tB]) fällt.

3. Kommunikationsnetzwerk (200) nach Anspruch 1 oder 2,
wobei die Angabe (214) über die Kommunikationszeit (Tcom) einen Zeitraum innerhalb des vorgegebenen Zeitintervalls ([tA; tB]) umfasst.

4. Kommunikationsnetzwerk (200) nach einem der vorstehenden Ansprüche,
wobei die Angabe (214) über die Kommunikationszeit (Tcom) das vorgegebene Zeitintervall ([tA; tB]) anzeigt.

5. Kommunikationsnetzwerk (200) nach einem der vorstehenden Ansprüche,
wobei die Kommunikationsentität (105) ausgebildet ist, basierend auf der Angabe (214) über die Kommunikationszeit (Tcom) die Verbindungsanfrage (211) an die Management-Entität (103) zu verzögern, bis der erste Zeitpunkt (t1) in das vorgegebene Zeitintervall ([tA; tB]) fällt.

6. Kommunikationsnetzwerk (200, 500) nach einem der vorstehenden Ansprüche, ferner mit:
einer Basisstation (102), die ausgebildet ist, eine Paging-Anfrage (502, 503) an das Kommunikationsendgerät (101) zu senden,
wobei das Kommunikationsendgerät (101) ausgebildet ist, in dem vorgegebenen Zeitintervall ([tA; tB], 524), in dem es zur Kommunikation bereit ist, ansprechend auf die Paging-Anfrage (502, 503) einen Verbindungsaufbau (504, 505, 506, 507, 508) mit der Basisstation (102) zu initiieren.

7. Kommunikationsnetzwerk (200, 500) nach Anspruch 6,
wobei das Kommunikationsendgerät (101) ausgebildet ist, außerhalb des vorgegebenen Zeitintervalls ([tA; tB], 524) einen Energiesparmodus (525) einzunehmen, in dem die Paging-Anfrage (502, 503) nicht empfangen und/oder nicht beantwortet wird.

8. Kommunikationsnetzwerk (200, 500) nach Anspruch 6 oder 7,
wobei die Management-Entität (103) ausgebildet ist, das vorgegebene Zeitintervall ([tA; tB], 524), zu dem das Kommunikationsendgerät (101) zur Kommunikation bereit ist, basierend auf einer Nachricht (508, 509) von dem Kommunikationsendgerät (101), die anzeigt, dass die Verbindung zu der Basisstation (102) aufgebaut ist, zu aktualisieren.

9. Kommunikationsnetzwerk (200, 500) nach Anspruch 8,
wobei die Nachricht (508, 509) von dem Kommunikationsendgerät (101) das vorgegebene Zeitintervall ([tA; tB], 524), zu dem das Kommunikationsendgerät (101) zur Kommunikation bereit ist, anzeigt.

10. Kommunikationsnetzwerk (200, 500) nach einem der Ansprüche 6 bis 9,
wobei die Management-Entität (103) ausgebildet ist, eine Paging-Nachricht (501) an die Basisstation (102) zu senden, wobei die Paging-Nachricht (501) das vorgegebene Zeitintervall ([tA; tB]), in dem das Kommunikationsendgerät (101) zur Kommunikation bereit ist, anzeigt, und
wobei die Basisstation ausgebildet ist, die Paging-Anfrage (502, 503) an das Kommunikationsendgerät (101) innerhalb des in der Paging-Nachricht (501) angezeigten vorgegebenen Zeitintervalls ([tA; tB]) zu senden.

11. Kommunikationsnetzwerk (200) nach einem der vorstehenden Ansprüche,
wobei das Kommunikationsendgerät (101) einen Sensor umfasst, der ausgebildet ist, Messdaten zu erfassen und ansprechend auf einen Steuerbefehl der Kommunikationsentität (105), die Messdaten an die Kommunikationsentität (105) zu übertragen.

12. Kommunikationsnetzwerk (200, 600) nach einem der vorstehenden Ansprüche,
wobei das Kommunikationsnetzwerk (200, 600) ein Netzwerk einer fünften Generation (5G) oder einer weiteren Generation ist, und wobei die Management-Entität (103) in einer Management und Instrumentierungsschicht (603) des Kommunikationsnetzwerkes (200, 600) angeordnet ist.

13. Management-Entität (103) für ein schnurloses Kommunikationsnetzwerk, mit:
einer Schnittstelle (220) zu einem Kommunikationsendgerät (101), wobei das Kommunikationsendgerät (101) in einem vorgegebenen Zeitintervall ([tA; tB]) zur Kommunikation bereit ist;
einem Speicher (203), in dem eine Information über das vorgegebene Zeitintervall ([tA; tB]), in dem das Kommunikationsendgerät (101) zur Kommunikation bereit ist, abgelegt ist; und
einer Schnittstelle (222) zu einer Kommunikations-Entität (105), wobei die Kommunikationsentität (105) ausgebildet ist, zu einem ersten Zeitpunkt (t1) eine Verbindungsanfrage (211) zum Aufbau einer Kommunikationsverbindung mit dem Kommunikationsendgerät (101) an die Management-Entität (103) zu übertragen; und
einem Prozessor (201), der ausgebildet ist, ansprechend auf die Verbindungsanfrage (211) der Kommunikationsentität (105) zu überprüfen, ob der erste Zeitpunkt (t1) in das vorgegebene Zeitintervall ([tA; tB]) fällt, zu dem das Kommunikationsendgerät (101) zur Kommunikation bereit ist, und falls der erste Zeitpunkt (t1) nicht in das vorgegebene Zeitintervall ([tA; tB]) fällt, der Kommunikationsentität (105) eine Angabe (214) über eine Kommunikationszeit (Tcom), zu der das Kommunikationsendgerät (101) zur Kommunikation bereit ist, zuzusenden,
**dadurch gekennzeichnet:**
**dass** der Prozessor (201) so ausgebildet ist, ansprechend auf eine Mehrzahl von Verbindungsanfragen (411a, 411b) einer Mehrzahl von Kommunikationsentitäten (105a, 105b) den jeweiligen Kommunikationsentitäten (105a, 105b) Angaben (414a, 414b) mit verschiedenen Kommunikationszeiten (Tcom1, Tcom2) innerhalb des vorgegebenen Zeitintervalls ([tA; tB]), zu dem das Kommunikationsendgerät (101) zur Kommunikation bereit ist, zuzusenden.

14. Verfahren (700) zum Kommunikationsaufbau in einem schnurlosen Kommunikationsnetzwerk zwischen einer Mehrzahl von Kommunikationsentitäten und einem Kommunikationsendgerät, das in einem vorgegebenen Zeitintervall ([tA; tB]) zur Kommunikation bereit ist, umfassend:
Übertragen (701) einer Mehrzahl von Verbindungsanfragen zum Aufbau einer Mehrzahl von Kommunikationsverbindungen mit dem Kommunikationsendgerät von der Mehrzahl von Kommunikationsentitäten zu einer Management-Entität zu einer Mehrzahl von Zeitpunkten (t1, t2), wobei der Management-Entität das vorgegebene Zeitintervall ([tA; tB]), zu dem das Kommunikationsendgerät zur Kommunikation bereit ist, bekannt ist;
Überprüfen (702) durch die Management-Entität, ob die Mehrzahl von Zeitpunkten (t1, t2) in das vorgegebene Zeitintervall ([tA; tB]) fällt, zu dem das Kommunikationsendgerät zur Kommunikation bereit ist,
**dadurch gekennzeichnet**:
falls ein Zeitpunkt der Mehrzahl von Zeitpunkten (t1, t2) nicht in das vorgegebene Zeitintervall ([tA; tB]) fällt, Übertragen (703) einer Angabe über eine Kommunikationszeit, zu der das Kommunikationsendgerät zur Kommunikation bereit ist, von der Management-Entität an die entsprechende Kommunikationsentität;
wobei den jeweiligen Kommunikationsentitäten (105a, 105b) Angaben (414a, 414b) mit verschiedenen Kommunikationszeiten (Tcom1, Tcom2) innerhalb des vorgegebenen Zeitintervalls ([tA; tB]), zu dem das Kommunikationsendgerät (101) zur Kommunikation bereit ist, zugesendet werden.

## Claims

1. Wireless communication network (200), having:
a communication terminal (101) that is ready for communication in a prescribed time interval ([tA; tB]);
a management entity (103) coupled to the communication terminal (101), wherein the management entity (103) stores the prescribed time interval ([tA; tB]) for which the communication terminal (101) is ready for communication; and
a communication entity (105) coupled to the management entity (103), wherein the communication entity (105) is designed to transmit a connection request (211) for setup of a communication connection to the communication terminal (101) to the management entity (103) at a first time (t1),
wherein the management entity (103) is designed to respond to the connection request (211) of the communication entity (105) by checking whether the first time (t1) falls within the prescribed time interval ([tA; tB]) for which the communication terminal (101) is ready for communication, and, if the first time (t1) does not fall within the prescribed time interval ([tA; tB]), to send the communication entity (105) a statement (214) indicating a communication time (Tcom) for which the communication terminal (101) is ready for communication,
**characterized:**
**in that** the management entity (103) is designed to respond to a plurality of connection requests (411a, 411b) of a plurality of communication entities (105a, 105b) by sending the respective communication entities (105a, 105b) statements (414a, 414b) having different communication times (Tcom1, Tcom2) within the prescribed time interval ([tA; tB]) for which the communication terminal (101) is ready for communication.

2. Communication network (200) according to Claim 1, wherein the management entity (103) is designed to forward the connection request (211) of the communication entity (105) to the communication terminal (101) if the first time (t1) falls within the prescribed time interval ([tA; tB]).

3. Communication network (200) according to Claim 1 or 2, wherein the statement (214) indicating the communication time (Tcom) comprises a period within the prescribed time interval ([tA; tB]).

4. Communication network (200) according to one of the preceding claims,
wherein the statement (214) indicating the communication time (Tcom) indicates the prescribed time interval ([tA; tB]).

5. Communication network (200) according to one of the preceding claims,
wherein the communication entity (105) is designed to take the statement (214) indicating the communication time (Tcom) as a basis for delaying the connection request (211) to the management entity (103) until the first time (t1) falls within the prescribed time interval ([tA; tB]).

6. Communication network (200, 500) according to one of the preceding claims,
further having:
a base station (102) designed to send a paging request (502, 503) to the communication terminal (101),
wherein the communication terminal (101) is designed to respond to the paging request (502, 503) in the prescribed time interval ([tA; tB], 524) in which it is ready for communication by initiating setup of a connection (504, 505, 506, 507, 508) to the base station (102).

7. Communication network (200, 500) according to Claim 6,
wherein the communication terminal (101) is designed to adopt an energy saving mode (525), in which the paging request (502, 503) is not received and/or is not answered, outside the prescribed time interval ([tA; tB], 524).

8. Communication network (200, 500) according to Claim 6 or 7,
wherein the management entity (103) is designed to update the prescribed time interval ([tA; tB], 524) for which the communication terminal (101) is ready for communication based on a message (508, 509) from the communication terminal (101) that indicates that the connection to the base station (102) is set up.

9. Communication network (200, 500) according to Claim 8,
wherein the message (508, 509) from the communication terminal (101) indicates the prescribed time interval ([tA; tB], 524) for which the communication terminal (101) is ready for communication.

10. Communication network (200, 500) according to one of Claims 6 to 9, wherein the management entity (103) is designed to send a paging message (501) to the base station (102), wherein the paging message (501) indicates the prescribed time interval ([tA; tB]) in which the communication terminal (101) is ready for communication, and
wherein the base station is designed to send the paging request (502, 503) to the communication terminal (101) within the prescribed time interval ([tA; tB]) indicated in the paging message (501).

11. Communication network (200) according to one of the preceding claims,
wherein the communication terminal (101) comprises a sensor designed to capture measurement data and to respond to a control command of the communication entity (105) by transmitting the measurement data to the communication entity (105).

12. Communication network (200, 600) according to one of the preceding claims,
wherein the communication network (200, 600) is a fifth-generation (5G) or further-generation network, and wherein the management entity (103) is arranged in a management and instrumentation layer (603) of the communication network (200, 600).

13. Management entity (103) for a wireless communication network, having:
an interface (220) to a communication terminal (101), wherein the communication terminal (101) is ready for communication in a prescribed time interval ([tA; tB]);
a memory (203) storing a piece of information about the prescribed time interval ([tA; tB]) in which the communication terminal (101) is ready for communication; and
an interface (222) to a communication entity (105), wherein the communication entity (105) is designed to transmit a connection request (211) for setup of a communication connection to the communication terminal (101) to the management entity (103) at a first time (t1); and
a processor (201) designed to respond to the connection request (211) of the communication entity (105) by checking whether the first time (t1) falls within the prescribed time interval ([tA; tB]) for which the communication terminal (101) is ready for communication, and, if the first time (t1) does not fall within the prescribed time interval ([tA; tB]),
to send the communication entity (105) a statement (214) indicating a communication time (Tcom) for which the communication terminal (101) is ready for communication,
**characterized:**
**in that** the processor (201) is designed to respond to a plurality of connection requests (411a, 411b) of a plurality of communication entities (105a, 105b) by sending the respective communication entities (105a, 105b) statements (414a, 414b) having different communication times (Tcom1, Tcom2) within the prescribed time interval ([tA; tB]) for which the communication terminal (101) is ready for communication.

14. Method (700) for communication setup in a wireless communication network between a plurality of communication entities and a communication terminal that is ready for communication in a prescribed time interval ([tA; tB]), comprising:
transmitting (701) a plurality of connection requests for setup of a plurality of communication connections to the communication terminal from the plurality of communication entities to a management entity at a plurality of times (t1, t2), wherein the management entity knows the prescribed time interval ([tA; tB]) for which the communication terminal is ready for communication;
checking (702), by the management entity, whether the plurality of times (t1, t2) falls within the prescribed time interval ([tA; tB]) for which the communication terminal is ready for communication,
**characterized:**
**by**, if a time from the plurality of times (t1, t2) does not fall within the prescribed time interval ([tA; tB]), transmitting (703) a statement indicating a communication time for which the communication terminal is ready for communication from the management entity to the applicable communication entity; wherein the respective communication entities (105a, 105b) are sent statements (414a, 414b) having different communication times (Tcom1, Tcom2) within the prescribed time interval ([tA; tB]) for which the communication terminal (101) is ready for communication.

## Revendications

1. Réseau de communication sans fil (200) comportant :
un terminal de communication (101) prêt à communiquer au cours d'un intervalle de temps prédéterminé ([tA ; tB]) ;
une entité de gestion (103) couplée audit terminal de communication (101), dans lequel l'intervalle de temps prédéterminé ([tA ; tB]) au cours duquel le terminal de communication (101) est prêt à communiquer est stocké dans l'entité de gestion (103) ; et
une entité de communication (105) couplée à l'entité de gestion (103), dans lequel l'entité de communication (105) est conçue pour transmettre à l'entité de gestion (103), à un premier instant (t1), une demande de connexion (211) pour établir une connexion de communication avec le terminal de communication (101),
dans lequel l'entité de gestion (103) est conçue pour vérifier, en réponse à la demande de connexion (211) provenant de l'entité de communication (105), si le premier instant (t1) se situe dans l'intervalle de temps prédéterminé ([tA ; tB]) au cours duquel le terminal de communication (101) est prêt à communiquer et, si le premier instant (t1) ne se situe pas dans l'intervalle de temps prédéterminé ([tA ; tB]), pour envoyer à l'entité de communication (105) une indication (214) concernant un temps de communication (Tcom) lors duquel le terminal de communication (101) est prêt à communiquer,
**caractérisé en ce que** l'entité de gestion (103) est conçue, en réponse à une pluralité de demandes de connexion (411a, 411b) provenant d'une pluralité d'entités de communication (105a, 105b), pour envoyer aux entités de communication respectives (105a, 105b) des indications (414a, 414b) comportant différents temps de communication (Tcom1, Tcom2) se situant à l'intérieur de l'intervalle de temps prédéterminé ([tA ; tB]) au cours duquel le terminal de communication (101) est prêt à communiquer.

2. Réseau de communication (200) selon la revendication 1,
dans lequel l'entité de gestion (103) est conçue pour acheminer la demande de connexion (211) de l'entité de communication (105) au terminal de communication (101) si le premier instant (t1) se situe dans l'intervalle de temps prédéterminé ([tA ; tB]).

3. Réseau de communication (200) selon la revendication 1 ou 2,
dans lequel l'indication (214) concernant le temps de communication (Tcom) comprend une période de temps se situant à l'intérieur de l'intervalle de temps prédéterminé ([tA ; tB]).

4. Réseau de communication (200) selon l'une des revendications précédentes,
dans lequel l'indication (214) concernant le temps de communication (Tcom) indique l'intervalle de temps prédéterminé ([tA ; tB]).

5. Réseau de communication (200) selon l'une des revendications précédentes,
dans lequel l'entité de communication (105) est conçue pour retarder la demande de connexion (211) envoyée à l'entité de gestion (103), sur la base de l'indication (214) concernant le temps de communication (Tcom), jusqu'à ce que le premier instant (t1) se situe dans l'intervalle de temps prédéterminé ([tA ; tB]).

6. Réseau de communication (200, 500) selon l'une des revendications précédentes, comportant en outre :
une station de base (102) conçue pour envoyer une demande de recherche de personnes (502, 503) au terminal de communication (101),
dans lequel le terminal de communication (101) est conçu pour déclencher, en réponse à la demande de recherche de personnes (502, 503), un établissement de connexion (504, 505, 506, 507, 508) avec la station de base (102) pendant l'intervalle de temps prédéterminé ([tA ; tB], 524) au cours duquel il est prêt à communiquer.

7. Réseau de communication (200, 500) selon la revendication 6,
dans lequel le terminal de communication (101) est conçu pour passer en mode d'économie d'énergie (525) en dehors de l'intervalle de temps prédéterminé ([tA ; tB], 524) au cours duquel la demande de recherche de personnes (502,503) n'est pas reçue et/ou n'est pas traitée.

8. Réseau de communication (200, 500) selon la revendication 6 ou 7,
dans lequel l'entité de gestion (103) est conçue pour mettre à jour l'intervalle de temps prédéterminé ([tA ; tB], 524) au cours duquel le terminal de communication (101) est prêt à communiquer sur la base d'un message (508, 509) provenant du terminal de communication (101) et indiquant que la connexion avec la station de base (102) est établie.

9. Réseau de communication (200, 500) selon la revendication 8,
dans lequel le message (508, 509) provenant du terminal de communication (101) indique l'intervalle de temps prédéterminé ([tA ; tB], 524) au cours duquel le terminal de communication (101) est prêt à communiquer.

10. Réseau de communication (200, 500) selon l'une quelconque des revendications 6 à 9,
dans lequel l'entité de gestion (103) est conçue pour envoyer un message de recherche de personnes (501) à la station de base (102), dans lequel le message de recherche de personnes (501) indique l'intervalle de temps prédéterminé ((tA ; tB]) au cours duquel le terminal de communication (101) est prêt à communiquer, et
dans lequel la station de base est conçue pour envoyer la demande de recherche de personnes (502, 503) au terminal de communication (101) à l'intérieur de l'intervalle de temps prédéterminé ([tA ; tB]) indiqué dans le message de recherche de personnes (501).

11. Réseau de communication (200) selon l'une des revendications précédentes,
dans lequel le terminal de communication (101) comprend un capteur conçu pour acquérir des données de mesure et, en réponse à une instruction de commande provenant de l'entité de communication (105), pour transmettre les données de mesure à l'entité de communication (105).

12. Réseau de communication (200, 600) selon l'une des revendications précédentes,
dans lequel le réseau de communication (200, 600) est un réseau de cinquième génération (5G) ou de génération ultérieure et dans lequel l'entité de gestion (103) est disposée dans une couche de gestion et d'instrumentation (603) du réseau de communication (200, 600).

13. Entité de gestion (103) destinée à un réseau de communication sans fil, comprenant :
une interface (220) avec un terminal de communication (101), dans lequel le terminal de communication (101) est prêt à communiquer au cours d'un intervalle de temps prédéterminé ([tA ; tB]) ;
une mémoire (203) dans laquelle est stockée une information concernant l'intervalle de temps prédéterminé ([tA ; tB]) au cours duquel le terminal de communication (101) est prêt à communiquer ; et
une interface (222) avec une entité de communication (105), dans lequel l'entité de communication (105) est conçue pour transmettre à l'entité de gestion (103), à un premier instant (t1), une demande de connexion (211) pour établir une connexion de communication avec le terminal de communication (101) ; et
un processeur (201) conçu pour vérifier, en réponse à la demande de connexion (211) provenant de l'entité de communication (105), si le premier instant (t1) se situe dans l'intervalle de temps prédéterminé ([tA ; tB]) au cours duquel le terminal de communication (101) est prêt à communiquer et, si le premier instant (t1) ne se situe pas dans l'intervalle de temps prédéterminé ([tA ; tB]), pour envoyer à l'entité de communication (105) une indication (214) concernant un temps de communication (Tcom) lors duquel le terminal de communication (101) est prêt à communiquer,
**caractérisé en ce que** le processeur (201) est conçu, en réponse à une pluralité de demandes de connexion (411a, 411b) provenant d'une pluralité d'entités de communication (105a, 105b), pour envoyer aux entités de communication respectives (105a, 105b) des indications (414a, 414b) comportant différents temps de communication (Tcom1, Tcom2) à l'intérieur de l'intervalle de temps prédéterminé ([tA ; tB]) au cours duquel le terminal de communication (101) est prêt à communiquer.

14. Procédé (700) pour établir une communication dans un réseau de communication sans fil entre une pluralité d'entités de communication et un terminal de communication qui est prêt à communiquer au cours d'un intervalle de temps prédéterminé ([tA ; IB]), comprenant :
la transmission (701) par la pluralité d'entités de communication à une entité de gestion, à une pluralité d'instants (t1, t2), une pluralité de demandes de connexion pour établir une pluralité de connexions de communication avec le terminal de communication, dans lequel l'entité de gestion est informée de l'intervalle de temps prédéterminé ([tA ; tB]) au cours duquel le terminal de communication est prêt à communiquer ;
la vérification par l'entité de gestion (702) du fait de savoir si la pluralité d'instants (t1, t2) se situe dans l'intervalle de temps prédéterminé ([tA ; tB]) au cours duquel le terminal de communication est prêt à communiquer,
caractérisé :
si un instant de la pluralité d'instants (t1, t2) ne se situe pas dans l'intervalle de temps prédéterminé ([tA ; tB]), par la transmission (703) par l'entité de gestion à l'entité de communication correspondante d'une indication concernant un temps de communication lors duquel le terminal est prêt à communiquer ;
dans lequel des indications (414a, 414b) comportant différents temps de communication (Tcom1, Tcom2) se situant à l'intérieur de l'intervalle de temps prédéterminé ([tA ; tB]) au cours duquel le terminal de communication (101) est prêt à communiquer, sont envoyées aux entités de communication respectives (105a, 105b).
